# EUROPÄISCHE PATENTANMELDUNG

(11) **EP 1 983 626 A2**
(43) Veröffentlichungstag der Anmeldung: **22.10.2008**
(21) Anmeldenummer: 08000598.6
(22) Anmeldetag: 14.01.2008
(51) Int. Cl.: H02G 3/04, H02G 3/38

(54) **Vorrichtung zum Schutz von Versorgungsleitungen, Kabeln od. dgl. im Bereich von Fahr- und/oder Fusswegen**

(30) Priorität: 18.04.2007 DE 102007018590
(71) Anmelder: Elspro Elektrotechnik Gmbh, 40721 Hilden (DE)
(72) Erfinder: Ribjitzki, Hans Werner, 58313 Herdecke (DE)
(74) Vertreter: Ostriga, Sonnet, Wirths & Roche

(57) **Zusammenfassung**

Die Erfindung betrifft eine Vorrichtung zum Schutz von Versorgungsleitungen, Kabeln od. dgl. im Bereich von Fahr- und/oder Fußwegen, mit mindestens einem Kabelkanal zur Aufnahme der vorgenannten Elemente, der mit einem Kabelkanal-Deckel verschließbar ist und beidseitig des Kabelkanals vorhandenen Rampenteilen.

Die Aufgabe der Erfindung besteht darin, eine neue Vorrichtung zum Schutz von Versorgungsleitungen, Kabeln und dergleichen im Bereich von Fahr- und/oder Fußwegen zu schaffen, welche montagefreundlich ist und eine lange Lebensdauer aufweist.

Die Aufgabe wird gelöst, indem der Kabelkanal mit dem ersten Rampenteil und der Kabelkanal-Deckel mit dem zweiten Rampenteil verbunden ist.

## Beschreibung

Die Erfindung betrifft eine Vorrichtung zum Schutz von Versorgungsleitungen, Kabeln od. dgl. im Bereich von Fahr- und/oder Fußwegen, mit mindestens einem Kabelkanal zur Aufnahme der vorgenannten Elemente, der mit einem Kabelkanal-Deckel verschließbar ist und beidseitig des Kabelkanals vorhandenen Rampenteilen.

Eine derartige Vorrichtung ist beispielsweise in der deutschen Patentschrift 197 07 689 C1 beschrieben, in der eine im Wesentlichen einstückige Kabelbrücke offenbart ist, die zusätzlich einen Kabelkanal-Deckel aufweist. Eine ähnliche Kabelbrücke ist beispielsweise auch aus der DE 101 10 568 C1 bekannt.

Hierbei wird als nachteilig angesehen, dass das Überfahren der Kabelbrücke durch Fahrzeuge häufig auf Dauer Beschädigungen des Kabelkanal-Deckels hervorruft.

Darüber hinaus ist aus der deutschen Patentschrift 198 10 554 C1 eine Schutzbrücke für Kabel, Schläuche, oder dergleichen vorbekannt, bei der die so genannten Auffahrrampen mit der Abdeckung einstückig ausgebildet sind und ein das Basisteil übergreifendes und in sich eng aufnehmendes Brückenteil ausbilden.

Letztlich ist in dem deutschen Gebrauchsmuster 203 06 800 U1 eine Vorrichtung zum Überfahren von Versorgungsleitungen, Kabeln und dergleichen beschrieben, die dreigeteilt in ein Auffahrteil, Abfahrteil und ein Horizontalteil ausgebildet ist.

Die vorher beschriebenen Vorrichtungen nach dem Stand der Technik werden aus diversen Gründen, z. B. bezüglich der Lebensdauer und der Montagefreundlichkeit, als verbesserungswürdig angesehen.

Ausgehend von dem zuerst genannten Stand der Technik besteht die Aufgabe der Erfindung darin, eine neue Vorrichtung zum Schutz von Versorgungsleitungen, Kabeln und dergleichen im Bereich von Fahr- und/oder Fußwegen zu schaffen, welche montagefreundlich ist und eine lange Lebensdauer aufweist.

Die Lösung der Aufgabe ergibt sich aus den Merkmalen des Patentanspruchs 1, insbesondere den Merkmalen des Kennzeichenteiles, wonach der Kabelkanal mit dem ersten Rampenteil und der Kabelkanal-Deckel mit dem zweiten Rampenteil verbunden ist.

Ein wesentlicher Vorteil der erfindungsgemäßen Vorrichtung besteht darin, dass der mit einem Rampenteil zusätzlich "beschwerte" Kabelkanal-Deckel beim Überfahren mit Fahrzeugen eine wesentlich größere Lagesicherheit aufweist und damit die Gefahr gering ist, dass der Kabelkanal-Deckel nach dem Überfahren sich nicht in einer vollständig geschlossenen Stellung befindet, sondern für Fußgänger eine Stolperfalle und gegebenenfalls für Kraftfahrzeuge ein Hindernis darstellen kann. Es wird damit auch verhindert, dass teilweise offen stehende Kabelkanal-Deckel insbesondere beim Überfahren durch Kraftfahrzeuge beschädigt werden.

Bei einer vorteilhaften Ausführungsform der Erfindung ist darüber hinaus der Kabelkanal und das erste Rampenteil bzw. der Kabelkanal-Deckel und das zweite Rampenteil als Basisteil bzw. Deckelteil einstückig stoffschlüssig ausgebildet, wodurch sich herstellungstechnische Vorteile ergeben.

Bei einer weiteren Ausführungsform weisen zur Bildung einer Kabelbrücke aus mehreren Kabelkanälen Letztere beidseitig jeweils mindestens zwei Kupplungselemente auf, welche zueinander versetzt angeordnet sind, die bei geschlossenen Kabelkanal-Deckeln von unterschiedlichen benachbarten Kabelkanal-Deckeln abgedeckt und gesichert werden.

Diese Ausführungsform ist von daher sehr vorteilhaft, da bereits nur durch die Sicherung jedes zweiten Kabelkanal-Deckels eine vollständige Sicherung der Kabelbrücke gegen eine Demontage möglich ist, wodurch bei der Montage Zeit gespart wird.

Letztlich weist eine weitere Ausführungsform der Erfindung einen mit stoffschlüssig angeordneten Gelenkklauen versehenen Kabelkanal-Deckel auf, wobei die Gelenkklauen auf ebenfalls stoffschlüssig am ersten Rampenteil angeordnete Gelenkachsen aufrastbar sind. Diese Art der Gelenkausbildung ist sehr einfach zu montieren, sehr robust und dauerhaft und weist von daher eine große Lebensdauer auf.

Weitere Vorteile der Erfindung ergeben sich aus der nachfolgenden Beschreibung eines Ausführungsbeispieles. Es zeigen:
Fig. 1 eine Schnittdarstellung durch eine geschlossene Vorrichtung zum Schutz von Versorgungsleitungen, Kabeln oder dergleichen,
Fig. 2 eine Schnittdarstellung einer Vorrichtung gemäß Fig. 1 in teilweise geöffnetem Zustand,
Fig. 3 eine Schnittdarstellung durch eine Vorrichtung gemäß Fig. 1 in geöffnetem Zustand,
Fig. 4 eine Draufsicht auf die Vorrichtung gemäß Ansichtspfeil IV in Fig. 1,
Fig. 5 eine skizzenhafte Draufsicht auf mehrere Vorrichtungen gemäß Fig. 1 und
Fig. 6 eine vergrößerte Teildarstellung einer Gelenkanordnung.

In den Zeichnungen ist insgesamt eine Vorrichtung zum Schutz von Versorgungsleitungen, Kabeln oder dergleichen mit der Bezugsziffer 10 bezeichnet.

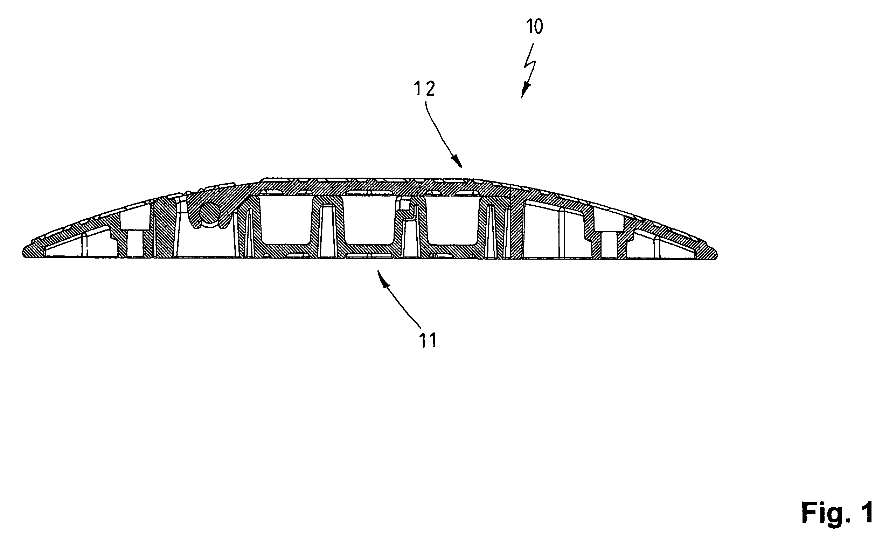

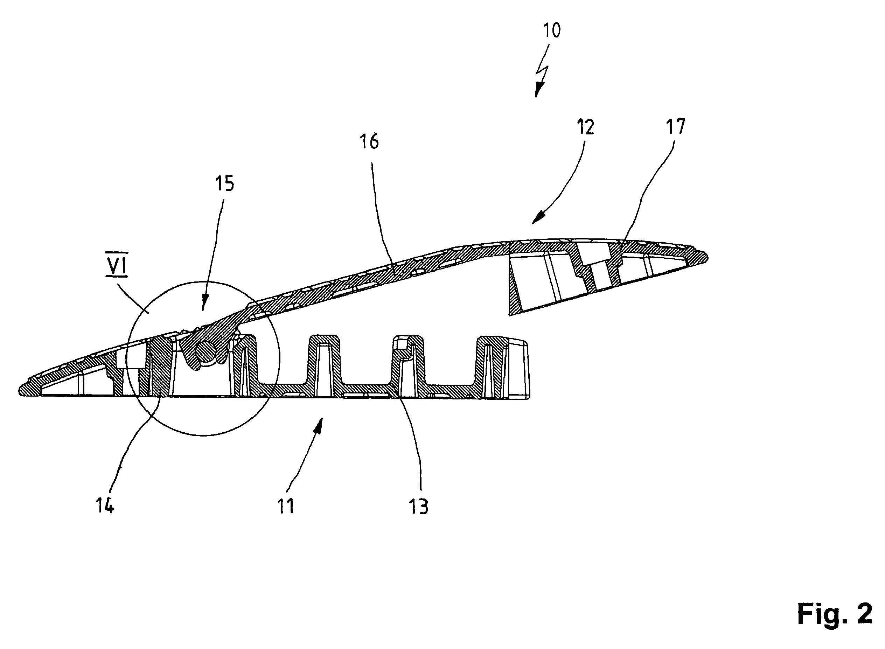

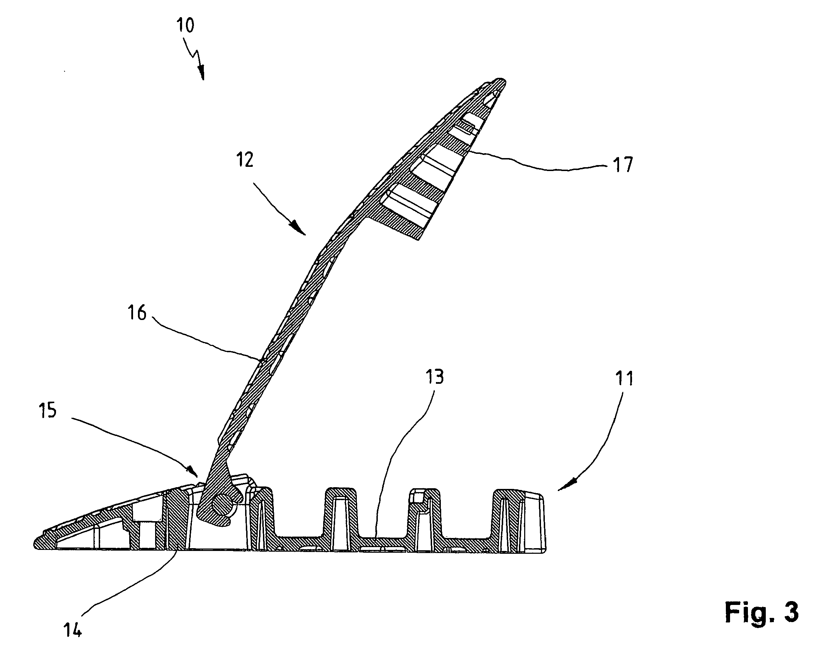

Aus den Figuren 1 bis 3 geht hervor, dass eine derartige Vorrichtung 10 aus einem Basisteil 11 einerseits und einem Deckelteil 12 andererseits ausgebildet ist. Das Basisteil 11 ist aufgeteilt in ein Kabelkanalteil 13 und einem daran stoffschlüssig angeordneten ersten Rampenteil 14. Das Deckelteil 12 ist über mehrere Gelenkanordnungen 15 mit dem ersten Rampenteil 14 verbunden. Das Deckelteil 12 weist einen Kabelkanal-Deckel 16 und ein daran stoffschlüssig angeformtes zweites Rampenteil 17 auf.

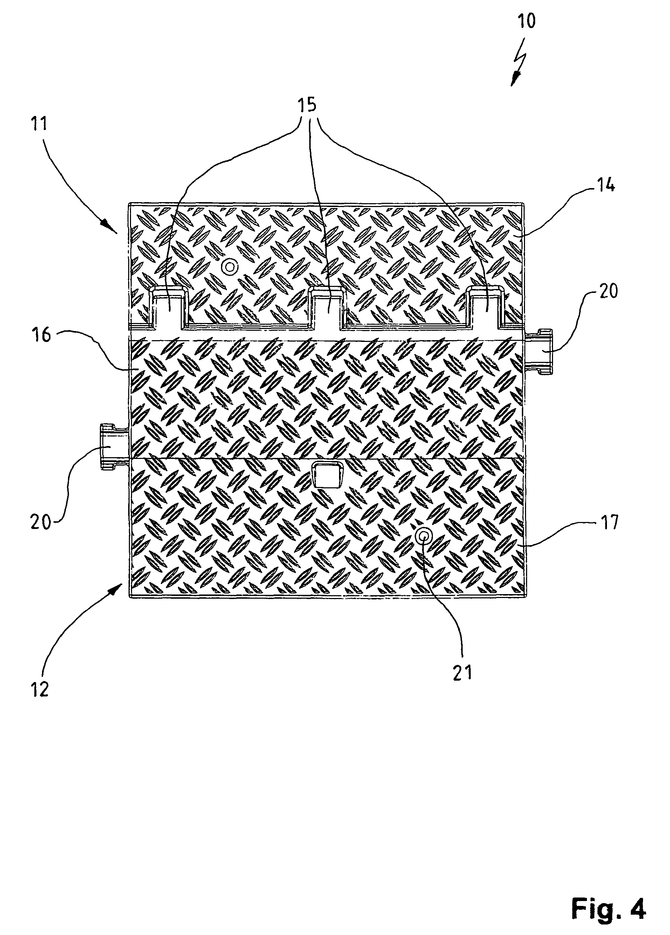

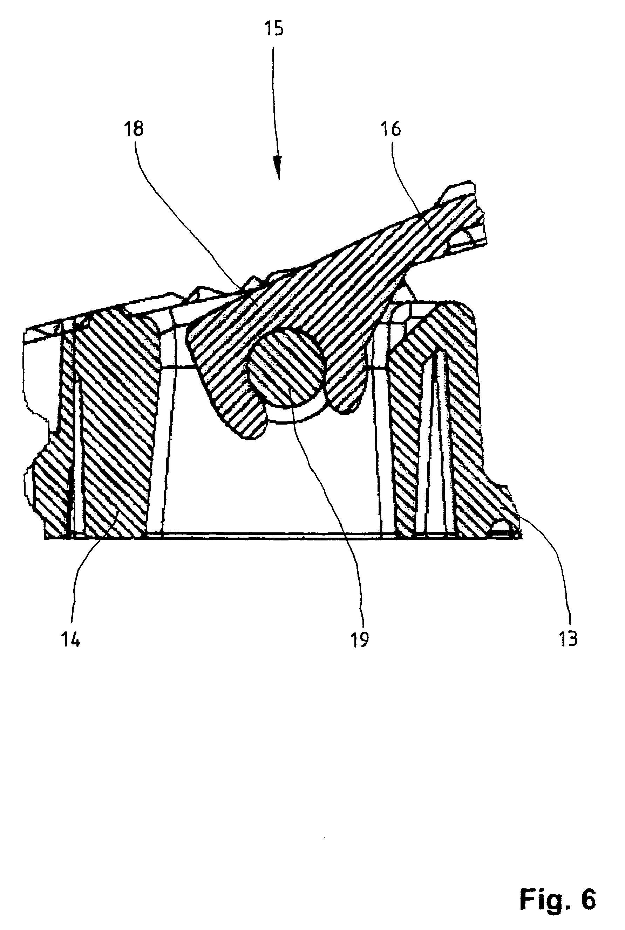

Die Gelenkanordnungen 15 werden - wie in Fig. 4 und 6 gut zu erkennen - aus stoffschlüssig am Kabelkanal-Deckel 16 angeordnete Gelenkklauen 18 und stoffschlüssig an ersten Rampenteil 14 angeordnete Gelenkachsen 19 gebildet, wobei die Gelenkklauen 18 auf die Gelenkachsen 19 aufrastbar sind.

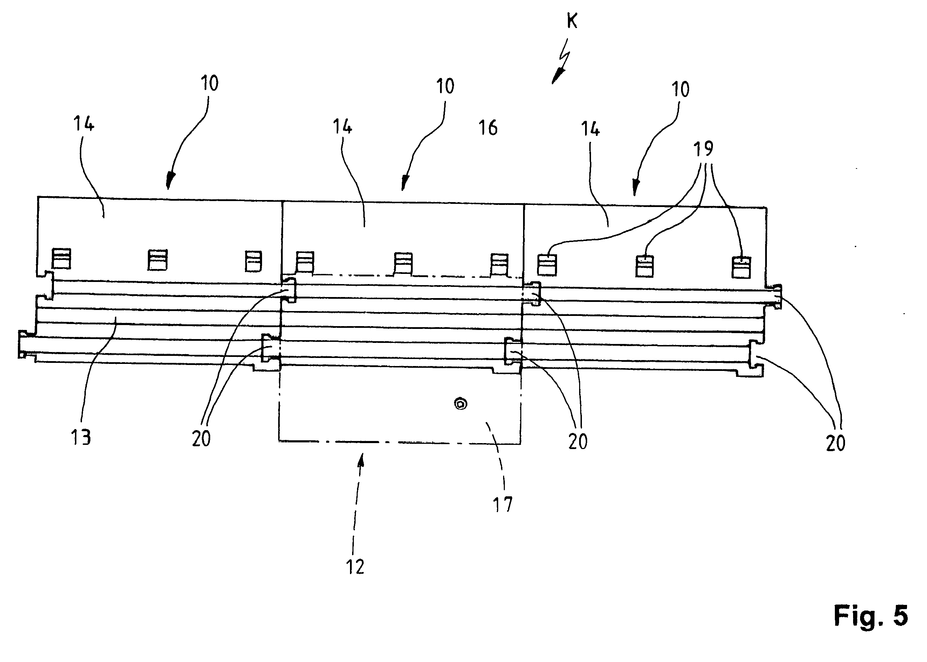

Insbesondere aus den Figuren 4 und 5 erkennt man, dass jede Vorrichtung 10 beidseitig jeweils mit zwei Kupplungselementen 20 versehen ist, wobei jeweils ein Kupplungselement 20 als Kupplungsvorsprung und ein Kupplungselement 20 als Kupplungshinterschneidung ausgebildet sind und jeder Kupplungsvorsprung passgenau in die Kupplungshinterschneidung der benachbarten Vorrichtung 10 einfügbar ist. Bei der Montage einer Kabelbrücke K aus mehreren Vorrichtungen 10 erkennt man insbesondere in der Fig. 5, dass die jeweils zwei an einer Seite einer Vorrichtung 10 angeordneten Kupplungselemente nicht von einem Deckelteil 12, sondern von zwei benachbarten Deckelteilen 12 jeweils abgedeckt und gesichert werden. Dies hat den Vorteil, dass nur jedes zweite Deckelteil 12 im Bereich einer Befestigungsöffnung 21 durch nicht dargestellte Befestigungsmittel am Untergrund befestigt werden muss, damit die Kabelbrücke K insgesamt gegen eine Demontage gesichert ist.

Zusammenfassend bleibt zu bemerken, dass die Grundkonstruktion der erfindungsgemäßen Vorrichtung 10 aus im Wesentlichen zwei Teilen, nämlich dem Basisteil 11 und dem Deckelteil 12, und insbesondere die einstückige Ausbildung von Kabelkanal-Deckel 16 und zweitem Rampenteil 17 eine stabile, dauerhaft beständige Anordnung der Kabelbrücke K auf einem Untergrund auch bei ständig wechselnder Belastung insbesondere beim Überfahren von Kraftfahrzeugen gewährleistet.

## Patentansprüche

1. Vorrichtung zum Schutz von Versorgungsleitungen, Kabeln od. dgl. im Bereich von Fahr- und/oder Fußwegen, mit mindestens einem Kabelkanal zur Aufnahme der vorgenannten Elemente, der mit einem Kabelkanal-Deckel verschließbar ist und beidseitig des Kabelkanals vorhandenen Rampenteilen, **dadurch gekennzeichnet, dass** der Kabelkanal (13) mit dem ersten Rampenteil (14) und der Kabelkanal-Deckel (16) mit dem zweiten Rampenteil (17) verbunden ist.

2. Vorrichtung nach Anspruch 1, **dadurch gekennzeichnet, dass** der Kabelkanal (13) und das erste Rampenteil (14) bzw. der Kabelkanal-Deckel (16) und das zweite Rampenteil (17) als Basisteil (11) bzw. Deckelteil (12) einstückig stoffschlüssig ausgebildet sind.

3. Vorrichtung nach Anspruch 1 oder 2, **dadurch gekennzeichnet, dass** zur Bildung einer Kabelbrücke (K) aus mehreren Kabelkanälen (13) Letztere beidseitig jeweils mindestens zwei Kupplungselemente (20) aufweisen, welche zueinander versetzt angeordnet sind, die bei geschlossenen Kabelkanal-Deckeln (16) von unterschiedlichen, benachbarten Kabelkanal-Deckeln (16) abgedeckt und gesichert werden.

4. Vorrichtung nach einem der vorangehenden Ansprüche, **dadurch gekennzeichnet, dass** der Kabelkanal-Deckel (16) stoffschlüssig angeordnete Gelenkklauen (18) aufweist, welche auf ebenfalls stoffschlüssig am ersten Rampenteil (14) angeordnete Gelenkachsen (19) aufrastbar sind.
